# EUROPÄISCHE PATENTSCHRIFT

(11) **EP 3 085 577 B1**
(45) Veröffentlichungstag und Bekanntmachung des Hinweises auf die Patenterteilung: **17.10.2018**
(21) Anmeldenummer: 16159980.8
(22) Anmeldetag: 11.03.2016
(51) Int. Cl.: B60N 2/22, B60N 2/24, B60N 2/70, B60N 2/75, B60N 2/30

(54) **POLSTERINTEGRIERTES BEDIENELEMENT**
CUSHION INTEGRATED OPERATING ELEMENT
ÉLEMENT DE COMMANDE INTEGRE DANS LE REMBOURRAGE

(30) Priorität: 24.04.2015 DE 102015106364
(43) Veröffentlichungstag der Anmeldung: 26.10.2016
(73) Patentinhaber: GRAMMER AG, 92224 Amberg (DE)
(72) Erfinder: Übelacker, Roland, 92536 Pfreimd (DE)
(74) Vertreter: Hannke, Christian

(56) Entgegenhaltungen:
- EP-A1- 2 829 436
- DE-A1- 19 737 867
- DE-A1-102013 003 867
- DE-C1- 19 740 378
- US-A1- 2010 109 401

## Beschreibung

Die Erfindung betrifft einen Sitz für ein Fahrzeug, insbesondere ein Schienenfahrzeug mit einer zumindest zwei Halteprofile umfassenden Haltevorrichtung, an der eine Rückenlehne mit einem Rückenpolsteranteil und ein Sitzteil mit einem Sitzpolsteranteil angeordnet sind, wobei das Sitzteil gegenüber der Haltevorrichtung in einer Sitzlängsrichtung verschiebbar angeordnet ist und über einen Feststellmechanismus an der Haltevorrichtung arretierbar ist.

An Passagiersitze für Fahrzeuge, insbesondere Schienenfahrzeuge, werden hohe Anforderungen gestellt. Neben einer hinreichenden Robustheit der Sitze spielt der Bauraum, den der Sitz einnimmt, ein große Rolle. Um eine optimale Sitzplatzkapazität zu erlangen, sollten die Passagiersitze möglichst klein bauen. Gleichzeitig sollten die Passagiersitze aber auch einen ausreichenden Komfort bieten. Insbesondere soll einem Passagier die Möglichkeit gegeben werden, den Sitz in eine geneigte Position beziehungsweise eine Liegeposition zu stellen, ohne dass die hinter ihm sitzende Person sich gestört fühlt. Aus dem Stand der Technik sind Passagiersitze bekannt, welche eine starre oder zumindest eingeschränkt bewegliche Rückenlehne und ein verschiebbares Sitzteil aufweisen. Dabei kann das Sitzteil in Sitzlängsrichtung, welche üblicherweise einer Fahrzeuglängsrichtung entspricht, verschoben werden. Der Körper der auf dem Sitzteil sitzenden Person schiebt sich dadurch nach vorne und nimmt somit eine geneigte Position beziehungsweise eine Liegeposition ein.

Um die Bewegung auszulösen, muss ein Bedienelement vorgesehen werden. Im bekannten Stand der Technik sind derartige Bedienelemente neben oder unter dem Sitzteil angeordnet. Durch seitlich angeordnete Bedienelemente wird zusätzlicher Bauraum in Sitzbreitenrichtung benötigt. Bedienelemente, die unter dem Sitz angeordnet sind, benötigen zusätzlichen Bauraum in Sitzhöhenrichtung. Ferner baut der Verschiebemechanismus oft sehr groß, wodurch weiterer Bauraum notwendig ist. Schließlich sind die bekannten Bedienelemente oft schwer zugänglich, wodurch der Bedienkomfort eingeschränkt ist. Im Stand der Technik sind auch Bedienelemente mit Verschiebemechanismen bekannt, welche eine Verschiebung mittels Aktuatoren realisieren; solche Mechanismen sind allerdings sehr kostenaufwendig. Demzufolge ist es Aufgabe der vorliegenden Erfindung, einen Sitz für ein Fahrzeug, insbesondere Schienenfahrzeuge, mit einem Bedienelement zum Verschieben des Sitzteils, welches für eine sich auf dem Sitz befindliche Person leicht zugänglich ist, zur Verfügung zu stellen, welcher einfach und kostengünstig baut und einen geringen Bauraum einnimmt.

Die Aufgabe wird gelöst durch einen Sitz für ein Fahrzeug gemäss Anspruch 1.

Durch die Anordnung des Bedienelementes in dem Sitzpolsteranteil oder dem Rückenpolsteranteil ist das Bedienelement für eine sich auf dem Sitz befindliche Person leicht zugänglich und bedienbar. Das erfindungsgemäße Sitzteil ist als Ganzes gegenüber der Haltevorrichtung verschiebbar angeordnet und wird durch einen Feststellmechanismus an der Haltevorrichtung arretiert. Dadurch, dass das Bedienelement mechanisch in Wirkverbindung mit dem Feststellmechanismus ist, kann die Arretierung auf einfachste Weise gelöst werden. Für einen derartigen rein mechanischen Mechanismus sind nur wenige Bauteile notwendig; daher ist dieser sehr kostengünstig realisierbar und nimmt nur sehr wenig Bauraum ein. Vorzugsweise ist der Fahrzeugsitz so angeordnet, dass der Sitz in Fahrzeuglängsrichtung bzw. der Bewegungsrichtung des Fahrzeugs orientiert ist. Die Verschiebung des Sitzteils entlang einer Sitzlängsrichtung würde somit einer Verschiebung in Fahrzeuglängsrichtung entsprechen. Es ist natürlich auch denkbar, dass der Sitz in einer Fahrzeugbreitenrichtung angeordnet ist, wodurch die Verschiebung des Sitzteils entlang einer Sitzlängsrichtung einer Verschiebung in Fahrzeugbreitenrichtung entsprechen würde.

In einer bevorzugten Ausführungsform ist der Feststellmechanismus als eine Rasteinrichtung ausgebildet, wobei die Rasteinrichtung eine Rastkontur und einen mit der Rastkontur zusammenwirkenden Rastvorsprung umfasst, wobei die Rastkontur an einem Seitenbereich der Haltevorrichtung angeordnet ist und zumindest zwei benachbarte Rastvertiefungen aufweist, wobei der Rastvorsprung in jeweils eine Rastvertiefung eingreifbar ist. Demzufolge entspricht eine Länge einer Rastvertiefung zumindest einer Länge des Rastvorsprungs.

Vorzugsweise ist der Rastvorsprung an einem ersten Abschnitt eines Blattfederelementes angeordnet. Ferner weist das Blattfederelement bevorzugt einen weiteren Abschnitt auf, der an dem Sitzteil angeordnet ist. Dieser weitere Abschnitt des Blattfederelementes liegt vorzugsweise flächig an dem Sitzteil an und ist beispielsweise durch eine Schraubverbindung oder Nietenverbindung mit dem Sitzteil verbunden. Es sind aber auch anderweitige Verbindungsarten denkbar. Vorzugsweise wird durch die Federkraft des Blattfederelementes der Rastvorsprung in eine Rastvertiefung der Rastkontur gedrückt. Der Rastvorsprung greift somit anhand der Federkraft des Blattfederelementes kraftschlüssig in eine Rastvertiefung ein. Dieser Eingriff des Rastvorsprungs in eine Rastvertiefung stellt somit eine Arretierung des Sitzteils dar, d.h. eine Verschiebung des Sitzteils wird durch den Eingriff unterbunden. Die Erfindung ist jedoch nicht auf ein Blattfederelement beschränkt, denkbar wären auch anderweitige elastische bzw. federnde Elemente, welche mit einem Abschnitt an dem Sitzteil angeordnet sind und an deren weiterem Abschnitt ein Rastvorsprung angeordnet ist.

In einer bevorzugten Ausführungsform schließen der erste und der weitere Abschnitt des Blattfederelementes einen Winkel ein. Der Winkel liegt vorzugsweise zwischen 90° und 180° besonders bevorzugt ist der Winkel zwischen 105° und 145°. Der erste Abschnitt erstreckt sich somit ausgehend von dem Rastvorsprung in Sitzhöhenrichtung schräg nach oben zu dem weiteren Abschnitt. Demzufolge wirkt die Federwirkung des Blattfederelementes in Sitzhöhenrichtung nach oben und der Rastvorsprung wird in Sitzhöhenrichtung nach oben in eine Rastvertiefung gedrückt. Es ist auch denkbar, dass durch die Federwirkung des Blattfederelementes der Rastvorsprung in Sitzhöhenrichtung nach unten in eine Rastvertiefung gedrückt wird und somit eine Arretierung des Sitzteils bewirkt wird.

Vorzugsweise umfasst das Bedienelement ein Verbindungselement, welches mit dem Rastvorsprung oder dem ersten Abschnitt des Blattfederelementes wirkverbunden ist, wodurch das Blattfederelement in Sitzhöhenrichtung entgegen der Federwirkung nach unten biegbar ist, wodurch der Rastvorsprung aus einer Rastvertiefung der Rastkontur bewegbar ist und somit die Arretierung des Sitzteils lösbar ist und das Sitzteil in Sitzlängsrichtung (X) verschiebbar ist. Ein derartiger Freigabemechanismus ist besonders einfach, da eine Drückbetätigung des Bedienelementes direkt auf das Blattfederelement wirkt. Ist die Biegung des Blattfederelementes ausreichend, dass der Rastvorsprung aus der Rastvertiefung bewegt ist, ist eine Verschiebung des Sitzteils freigegeben. Bei Erreichen der gewünschten Sitzposition muss das Bedienelement lediglich entlastet werden. Die Federkraft des Blattfederelementes bewirkt ein Eingreifen des Rastvorsprungs in eine benachbarte Rastvertiefung, wodurch das Sitzteil wieder arretiert wird. Gleichzeitig wird durch die Federkraft des Blattfederelementes das Bedienelement wieder in seine ursprüngliche Position bewegt. Es wäre auch denkbar, dass das Bedienelement eine weitere Rasteinrichtung aufweist, wodurch das Bedienelement sich so lange in einer Freigabeposition befindet bis es wiederum betätigt wird. Wird hingegen der Rastvorsprung durch ein Federelement in Sitzhöhenrichtung nach unten in eine Rastvertiefung gedrückt, muss das Verbindungselement derart ausgestaltet sein, das der Rastvorsprung in Sitzhöhenrichtung nach oben gezogen wird, um einen Auslösevorgang des Sitzteils zu bewirken. Vorzugsweise ist in diesem Fall ein Umsetzelement vorhanden, welches eine Drückbewegung des Bedienelementes nach unten in eine Zugbewegung nach oben umsetzt.

In einer bevorzugten Ausführungsform ist die Rastkontur als Ausnehmung oder Durchbruch in einem Halteprofil der Haltevorrichtung integriert. Demnach greift der Rastvorsprung direkt in eine Ausnehmung oder einen Durchbruch an einem Haltprofil ein. Eine derartige Ausgestaltung ist besonders bevorzugt, da sie besonders einfach baut. Vorzugsweise weist die Rastkontur einen im Wesentlichen rechteckigen Querschnitt auf. In einer Freigabeposition, d.h. der Rastvorsprung greift nicht in eine Rastvertiefung ein, bewegt sich durch die Verschiebung des Sitzes der Rastvorsprung entlang einer ersten Länge des Querschnitts, welche sich in Sitzlängsrichtung erstreckt. Diese erste Länge entspricht somit einem maximalen Verschiebeweg des Sitzteils. An einem in Sitzhöhenrichtung oberen Bereich der Ausnehmung oder des Durchbruchs ragen senkrechte Trennstege in die Ausnehmung oder den Durchbruch hinein. Die Trennstege stellen somit die Begrenzungen der Rastvertiefung dar und definieren somit eine Rastvertiefung. Die Einragtiefe eines Trennstegs definiert weiterhin den Betätigungsweg des Bedienelementes, denn das Bedienelement muss so weit bewegt werden bis der Rastvorsprung nicht mehr von den Trennstegen eingegrenzt wird, um den Rastvorsprung bzw. das Sitzteil freizugeben.

In einer besonders bevorzugten Ausführungsform ragt der Rastvorsprung durch die als Durchbruch ausgestaltete Rastkontur hindurch. Vorzugsweise steht der durchragende Abschnitt des Rastvorsprungs mit dem Verbindungselement in Wirkkontakt, wobei der Abstand in Sitzbreitenrichtung zwischen dem Verbindungselement und einer Sitzmittelachse größer ist als der Abstand in Sitzbreitenrichtung zwischen der Sitzmittelachse und des den Durchbuch enthaltenden Halteprofils. Vorzugsweise ist das Bedienelement direkt oberhalb des durchragenden Abschnitts des Rastvorsprungs angeordnet. Das Bedienelement kann somit sehr einfach konstruiert werden. Vorzugsweise umfasst es ein Betätigungsteil, welches durch einen Nutzer nach unten bzw. ein- gedrückt werden kann. Weiterhin umfasst das Bedienelement ein Verbindungselement, welches die Drückbewegung auf den Rastvorsprung überträgt. Das Verbindungselement kann demnach möglichst einfach ausgestaltet werden, da lediglich eine senkrechte Drückbewegung eines Betätigungsteils zu übertragen ist. Bevorzugt ist eine T-förmige Ausgestaltung, wobei der untere schmälere Teil der Breite des Rastvorsprungs entspricht und der oberer breitere Teil der Länge des Betätigungsteils. Ein weiterer Vorteil der Ausgestaltung der Rastkontur als Durchbruch an einem Halteprofil ist die mechanische Stabilität. Ein eventuelles Herausrutschen des Rastvorsprungs aus der Rastkontur ist in dieser Ausführungsform nicht möglich.

Erfindungemäss weisen der Sitzpolsteranteil oder der Rückenpolsteranteil eine Polsteraussparung auf, in der das Bedienelement angeordnet ist. Erfindungsgemäss ist die Polsteraussparung in einem Seitenbereich, insbesondere einem äußeren Randbereich des Sitzpolsteranteils oder der Rückenpolsteranteils angeordnet. Dadurch ist das Bedienelement für eine Person leicht zu bedienen und die Person fühlt sich hinsichtlich des Sitzkomforts nicht beeinträchtigt. Darüber hinaus erstreckt sich vorzugsweise ein Bezug über die Polsteroberfläche des Sitzpolsteranteils beziehungsweise des Rückenpolsteranteils einschließlich des Bedienelementes. Weiterhin bestehen der Sitzpolsteranteil beziehungsweise der Rückenpolsteranteil bevorzugt aus einem Schaumstoff. Gemäß einer bevorzugten Ausführungsform ist die Polsteraussparung mit dem Bedienelement unter der Polsteroberfläche im Schaumstoff angeordnet. Bevorzugt liegt das Bedienelement 2 bis 30 mm unter der Polsteroberfläche, besonders bevorzugt 10 mm. Diese Ausführungsform hat den Vorteil, dass eine sich auf dem Sitz befindliche Person das Bedienelement nicht spürt. Es ist aber auch denkbar, die Polsteraussparung als Freisparung in dem Sitzpolsteranteil beziehungsweise dem Rückenpolsteranteil auszugestalten. Vorzugsweise kann eine solche Freisparung durch zwei seitliche Einschnitte am jeweiligen Polsteranteil realisiert werden. Das Bedienelement befindet sich somit lediglich unter dem Bezug. Bevorzugt schließt das Bedienelement flächig mit dem Sitzpolster ab, es ist aber auch denkbar, dass das Bedienelement über das Sitzpolster geringfügig hinausragt. Gemäß einer weiteren bevorzugten Ausführungsform ist die Polsteraussparung als eine Vertiefung in der Polsteroberfläche in dem Sitzpolsteranteil beziehungsweise dem Rückenpolsteranteil ausgestaltet. Ferner ist es denkbar, dass ein Kunststoffspritzteil an dem Bedienelement angeordnet ist, so dass der Bezug zwischen dem Kunststoffspritzteil und dem Bedienelement liegt. Beispielsweise könnte das Kunststoffspritzteil durch den Stoff des Bezuges auf das Bedienelement geklippt werden.

Vorteilhafterweise trägt der Bezug an der Stelle des Bedienelementes eine Kennzeichnung. Eine solche Kennzeichnung kann beispielsweise farblich und/oder haptisch und/oder in Form eines Piktogramms dargestellt sein.

Gemäß einer weiteren bevorzugten Ausführungsform umfasst die mechanische Wirkverbindung zwischen dem Bedienelement und dem Feststellmechanismus einen Bowdenzug und/oder einen Gestängeantrieb. Demnach muss das Bedienelement nicht zwingend in der Nähe des Feststellmechanismus angeordnet werden. Insbesondere für den Fall, dass das Bedienelement in dem Rückenpolsteranteil angeordnet ist, ist eine solche Ausgestaltung sinnvoll.

Vorzugsweise wird mit dem Bowdenzug und/oder Gestängeantrieb zumindest eine blockierbare Gasfeder angesteuert. Derartige Gasfedern sind unter dem Begriff BLOC-O-LIFT bekannt. Sie umfassen ein spezielles Kolben-Ventilsystem. Bei geöffnetem Ventil wirkt die Gasfeder kraftunterstützend und dämpfend. Bei geschlossenem Ventil blockiert die Gasfeder und setzt sich einer Bewegung mit sehr hohem Widerstand entgegen. Dabei ist ein federndes oder starres Blockieren möglich. Demnach wäre es denkbar, die zumindest eine blockierbare Gasfeder zwischen der Haltevorrichtung und dem Sitzteil so anzuordnen, dass in dem blockiertem Zustand der Gasfeder eine Bewegung des Sitzteils unterbunden wird und das Sitzteil somit arretiert wird. Es ist aber auch denkbar, dass durch den Bowdenzug bzw. den Gestängeantrieb anderweitige Arretierungen oder Rasterungen angesteuert werden.

In einer bevorzugten Ausführungsform weist die Rastkontur vier benachbarte Rastvertiefungen auf, welche durch Trennstege derart voneinander beabstandet sind, dass bei Einrasten in eine erste Rastvertiefung sich das Sitzteil in einer Grundposition befindet, bei Einrasten in eine zweite Rastvertiefung sich das Sitzteil in einer ersten Position befindet, welche um 25 mm entlang der Sitzlängsrichtung gegenüber der Grundposition verschoben ist, bei Einrasten in eine dritte Rastvertiefung sich das Sitzteil in einer zweiten Position befindet, welche z.B. um 50 mm entlang der Sitzlängsrichtung gegenüber der Grundposition verschoben ist und bei Einrasten in eine vierte Rastvertiefung sich das Sitzteil in einer dritten Position befindet, welche z.B. um 75 mm entlang der Sitzlängsrichtung gegenüber der Grundposition verschoben ist.

Vorzugsweise weist die Rastkontur zwischen der dritten und der vierten Rastvertiefung einen Trennsteg auf, welcher eine größere Einragtiefe aufweist als die übrigen Trennstege, so dass ein größerer Betätigungsweg notwendig ist, um den Rastvorsprung von der dritten zu der vierten Rastvertiefung zu bewegen. Um den Sitz in eine Endverschiebeposition zu bewegen, ist somit ein größerer Betätigungsweg notwendig. Die Endverschiebeposition entspricht vorzugsweise einer Polsteraustauschposition. Eine solche Polsteraustauschfunktion kann in der Endverschiebeposition leicht realisiert werden, da der benötigte Freiraum für einen Bedienhebel vorhanden ist und somit eine Kollision mit dem Feststellmechanismus vermieden werden kann.

Gemäß einer bevorzugten Ausführungsform ist der Rückenpolsteranteil mit dem Sitzpolsteranteil verbunden und bewegt sich bei einer Verschiebung des Sitzteils zumindest abschnittsweise mit. Vorzugsweise wird durch die Verlagerung des Sitzteils der Sitzrücken im unteren Bereich um 8 Grad geneigt. Es ist aber auch denkbar, eine starre Rückenlehne vorzusehen, wodurch durch die Verschiebung des Sitzteils ein entsprechender Freiraum zwischen Sitzteil und Rückenlehne entsteht.

In einer bevorzugten Ausführungsform umfasst die Haltevorrichtung zwei Halteprofile, welche L-förmig ausgebildet sind. Diese Halteprofile weisen einen ersten Abschnitt, der sich in Sitzlängsrichtung erstreckt und einen weiteren Abschnitt, der sich in Sitzhöhenrichtung erstreckt, auf. Der erste Abschnitt weist weiterhin Befestigungsvorrichtungen auf, mittels welcher die Halteprofile an einem geeigneten Sitzunterbau befestigt werden können. Ferner ist an dem weiteren Abschnitt die Rückenlehne anordenbar. Die Rückenlehne kann dabei aus einer Rückenlehnenschale oder einem entsprechenden Rahmen bestehen, auf denen der Rückenpolsteranteil angeordnet ist. Weiterhin könnte an dem weiteren Abschnitt eine Armlehne angebracht werden. Denkbar ist, eine solche Armlehne unbeweglich mit dem jeweiligen Halteprofil zu verbinden. Es ist aber auch denkbar, die Armlehne über ein Gelenk an dem Halteprofil anzuordnen.

In einer bevorzugten Ausführungsform ist das Sitzteil über ein Schienensystem an der Haltvorrichtung verschiebbar gelagert. Ein solches Schienensystem umfasst zumindest eine Führungsschiene, welche beispielsweise mit dem Halteprofil verbunden ist. In dieser Führungsschiene sind Gleitelemente geführt, welche mit dem Sitzteil verbunden sind. Die Führungsschiene kann dabei U-förmig ausgestaltet sein. Es sind aber auch anderweitige Formen der Führungsschiene denkbar, wie beispielsweise eine L-Form oder eine C-Form. Es ist auch denkbar, anstatt von Gleitelementen Rollen zu verwenden. Es sind auch anderweitige Führungssysteme, wie beispielsweise Kugellager, denkbar.

Vorzugsweise umfasst das Sitzteil eine Sitzschale oder einen Befestigungsrahmen, an welchem der Sitzpolsteranteil angeordnet ist.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: einen erfindungsgemäßen Sitz gemäß einer Ausführungsform der Erfindung;
- Fig.2: das Sitzteil des erfindungsgemäßen Sitzes gemäß einer Ausführungsform der Erfindung;
- Fig.3: das Sitzteil des erfindungsgemäßen Sitzes gemäß einer Ausführungsform der Erfindung;
- Fig.4: in einer Seitenansicht das Sitzteil des erfindungsgemäßen Sitzes in der Grundposition;
- Fig.4a: eine Seitenansicht einer Rastkontur;
- Fig.4b,c: in einer Seitenansicht das Sitzteil des erfindungsgemäßen Sitzes in einer ersten bzw. zweiten verschobenen Position
- Fig.5: einen erfindungsgemäßen Sitz gemäß einer Ausführungsform der Erfindung;
- Fig.6: ein Schienensystem zur Lagerung des Sitzteils an der Haltevorrichtung;
- Fig.7: eine schematische Darstellung eines Feststellmechanismus mit einer blockierbaren Gasfeder.

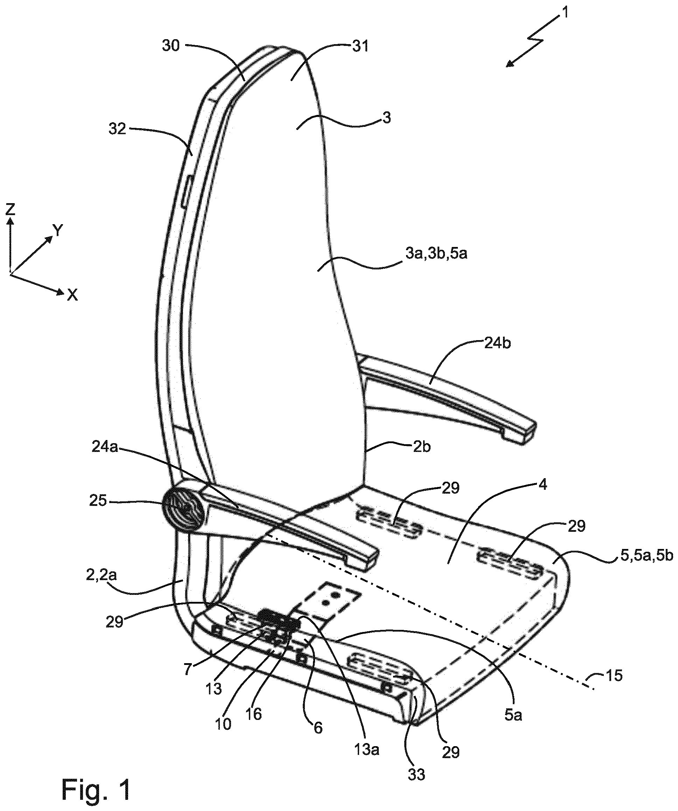

In Fig. 1 wird eine Ausführungsform eines erfindungsgemäßen Sitzes (1) für ein Personenbeförderungsmittel, insbesondere ein Schienenfahrzeug gezeigt. Der Sitz (1) umfasst eine zwei Halteprofile (2a, 2b) umfassende Haltevorrichtung (2), an der eine Rückenlehne (2) mit einem Rückenpolsteranteil (3a) und ein Sitzteil (4) mit einem Sitzpolsteranteil (5) angeordnet sind. Die Polsteranteile (3a, 5) weisen jeweils eine Polsteroberfläche (3b, 5b) auf, wobei sich ein Bezug (5a) über die Polsteranteile (3a, 5) erstreckt. Das Sitzteil (4) ist gegenüber der Haltevorrichtung (2) in einer Sitzlängsrichtung (X) verschiebbar angeordnet und über einen Feststellmechanismus (6) an der Haltevorrichtung (2) arretierbar. Der Sitz umfasst weiterhin ein Bedienelement (7), welches in dem Sitzpolsteranteil (5) integriert ist, mit dem Feststellmechanismus (6) mechanisch in Wirkverbindung ist und durch welches die Arretierung lösbar ist. Ein Teil der Feststelleinrichtung (6), welche in den folgenden Figuren näher beschrieben wird, ist ein Blattfederelement (12). Das Blattfederelement (12) ist mit einem ersten Abschnitt (12a) an dem Sitzteil (4) angeordnet und weist einen weiteren Abschnitt (12b) auf, an dem eine Rastvorrichtung angeordnet ist.

Die zwei Halteprofile (2a, 2b) der Haltevorrichtung (2) sind L-förmig ausgebildet und umfassen einem ersten Abschnitt (22), der sich in Sitzlängsrichtung (X) erstreckt und einen weiteren Abschnitt (23), der sich in Sitzhöhenrichtung (Z) erstreckt. An den jeweiligen weiteren Abschnitten der Halteprofile (2a, 2b) ist auf jeder Seite des Sitzes (1) eine Armlehne (24a, 24b) durch ein Gelenk (25) angeordnet. Es ist aber auch eine unbewegliche Anordnung der Armlehnen denkbar. Ferner ist an dem weiteren Abschnitt (23) der Halteprofile die Rückenlehne angeordnet. In diesem Ausführungsbeispiel besteht die Rückenlehne (3) aus einem Schalenelement (30), welches zwischen den zwei Halteprofilen (2a, 2b) angeordnet ist. An dem Schalenelement (30) ist der Rückenpolsteranteil angebracht. Der Rückenpolsteranteil (31) ist derart ausgestaltet, dass er über den Halteprofilen (2a, 2b) liegt. Die Halteprofile sind sozusagen baulich in das Schalenelement (30) integriert. Befindet sich der Sitz in einer Grundposition, ist also das Sitzteil nicht verschoben, ist der Rückenpolsteranteil (31) an dem Sitzpolsteranteil (5) anliegend. Wird das Sitzteil (4) verschoben, entsteht eine Lücke zwischen dem Rückenpolsteranteil und dem Sitzpolsteranteil. Denkbar wäre aber auch, dass der Rückenpolsteranteil mit dem Sitzpolsteranteil verbunden ist und sich bei einer Verschiebung des Sitzteils (4) zumindest abschnittsweise mit bewegt. Ferner erstreckt sich der Rückenpolsteranteil (31) bis in den Kopfbereich einer darin sitzenden Person. Schließlich wird die Rückseite des Sitzes von einem rückseitigen Schalenteil (32) abgedeckt.

Das Sitzteil (4) mit dem Sitzpolsteranteil (5) ist gegenüber der Haltevorrichtung (2) in einer Sitzlängsrichtung (X) verschiebbar angeordnet. Dabei sind an dem Sitzteil vier längliche Gleitelemente (29) mit einem rechteckigen Querschnitt angeordnet. Es sind jeweils zwei Gleitelemente (29) auf je einer Seite des Sitzteils (4) hintereinanderliegend angeordnet. Das Sitzteil (4) umfasst eine Sitzschale (33), an dessen unterer Seite die Gleitelemente (29) angeordnet sind und an dessen Oberseite der Sitzpolsteranteil (5) angeordnet ist. Alternativ ist anstatt der Sitzschale auch ein Befestigungsrahmen oder ähnliches denkbar. Die Gleitelemente (29) werden in einer U-förmigen Führungsschiene, welche an dem jeweiligen Halteprofil angeordnet ist, geführt. Weitere denkbare Ausführungsformen wären L- oder C-förmige Führungsschienen, welche entweder an den Halteprofilen oder an dem Sitzteil angeordnet sind. Anstatt der Gleitelemente wäre auch eine Anordnung mit Rollen oder Kugellagern denkbar.

Das Bedienelement (7) umfasst ein Betätigungsteil (13a) und ein Verbindungselement (13) und ist in einer Ausnehmung (16) des Sitzpolsteranteils (5) angeordnet. Diese Ausnehmung (16) ist in einem Seitenbereich (16), insbesondere in einem äußersten Randbereich des Sitzpolsteranteils (5) angeordnet. Ein solcher Seitenbereich ist kein Teil eines üblichen Sitzbereichs und schränkt somit auch nicht den Sitzkomfort ein. Demnach ist das Bedienelement (7) für einen Nutzer bequem zugänglich. Der Sitzpolsteranteil (5) kann weiterhin einen Bezug (5a) aufweisen, wobei dieser sich über das Bedienelement (7) erstrecken kann. Für diesen Fall kann der Bezug an der Stelle des Bedienelementes (7) eine Kennzeichnung aufweisen.

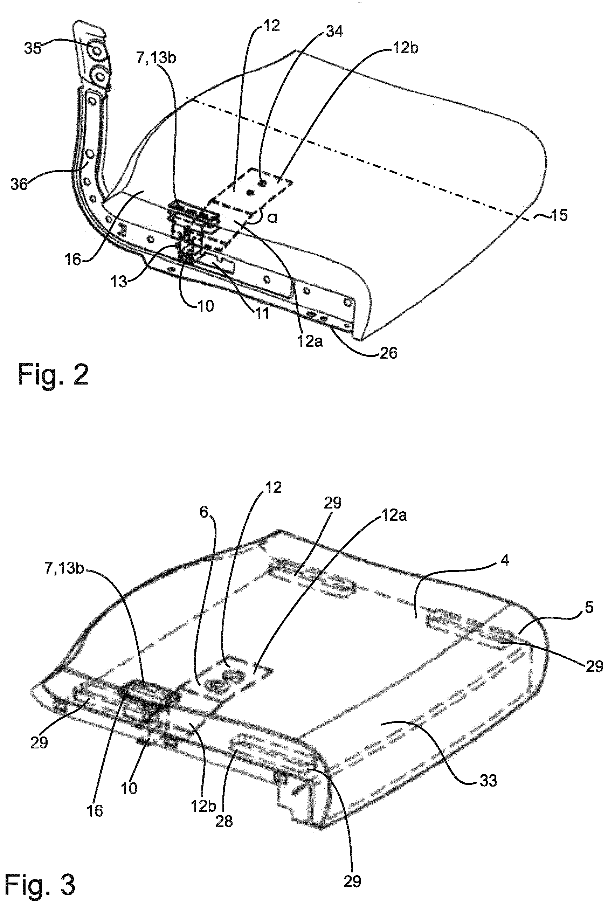

In den Figuren 2 und 3 wird der untere Bereich des Sitzes detailliert gezeigt. Dabei ist der Feststellmechanismus (6) als eine Rasteinrichtung (8) ausgebildet, wobei die Rasteinrichtung (8) eine Rastkontur (9) und einen mit der Rastkontur (9) zusammenwirkenden Rastvorsprung (10) umfasst. Die Rastkontur (9) ist an einem Seitenbereich der Haltevorrichtung (2) bzw. an einem ersten Halteprofil (2a) angeordnet. Ferner weist die Rastkontur (9) zumindest zwei benachbarte Rastvertiefungen (11) auf, in welche der Rastvorsprung (10) eingreift.

Der Rastvorsprung ist an einem ersten Abschnitt (12a) eines Blattfederelementes (12) angeordnet. Weiterhin weist das Blattfederelement (12) einen weiteren Abschnitt (12b) auf, der flächig an dem Sitzteil (4) angeordnet ist. Der weitere Abschnitt (12b) des Blattfederelementes (12) kann hierbei beispielsweise durch eine Schraubverbindung (34) mit dem Sitzteil (4) verbunden werden. Es sind aber auch anderweitige Verbindungsarten wie z.B. eine Nietenverbindung denkbar. Weiterhin ist die Erfindung nicht auf ein Blattfederelement beschränkt, denkbar wären auch anderweitige elastische bzw. federnde Elemente, welche mit einem Abschnitt an dem Sitzteil angeordnet sind und an deren weiterem Abschnitt der Rastvorsprung angeordnet ist. Durch die Federkraft des Blattfederelementes (12) wird der Rastvorsprung (10) in eine Rastvertiefung (11) gedrückt. Der Rastvorsprung (10) greift somit anhand des Blattfederelementes (12) kraftschlüssig in eine Rastvertiefung (11) ein. Eine Verschiebung des Sitzteils (4) wird demnach durch diesen Eingriff unterbunden.

Um eine entsprechende Federwirkung zu erreichen, ist das Blattfederelement (12) derart ausgebildet, dass der erste (12a) und der weitere Abschnitt (12b) einen Winkel (α) einschließen. Der Winkel liegt vorzugsweise zwischen 90° und 180°, besonders bevorzugt zwischen 105° und 145°. Der erste Abschnitt (12a) erstreckt sich ausgehend von dem Rastvorsprung (10) in Sitzhöhenrichtung (Z) schräg nach oben zu dem weiteren Abschnitt (12b), wodurch eine Federwirkung des Blattfederelements (12) in Sitzhöhenrichtung (Z) nach oben wirkt und der Rastvorsprung in Sitzhöhenrichtung (Z) nach oben in eine Rastvertiefung (11) gedrückt wird. Es ist jedoch auch denkbar, die Blattfeder derart anzuordnen, dass die Federwirkung in Sitzhöhenrichtung (Z) nach unten wirkt und der Rastvorsprung (10) in Sitzhöhenrichtung (Z) nach unten in eine Rastvertiefung (11) gedrückt wird.

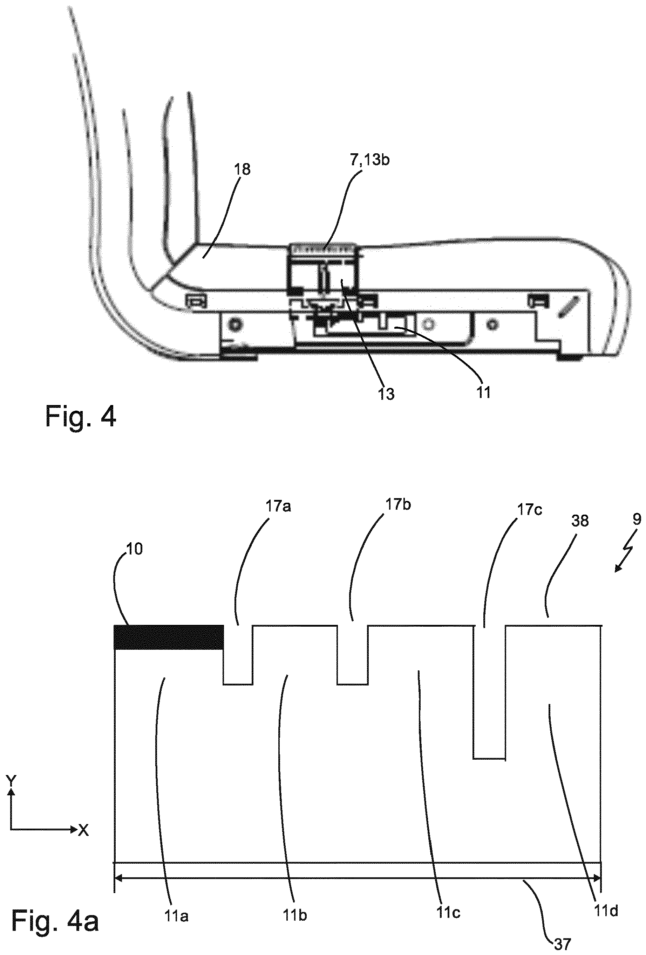

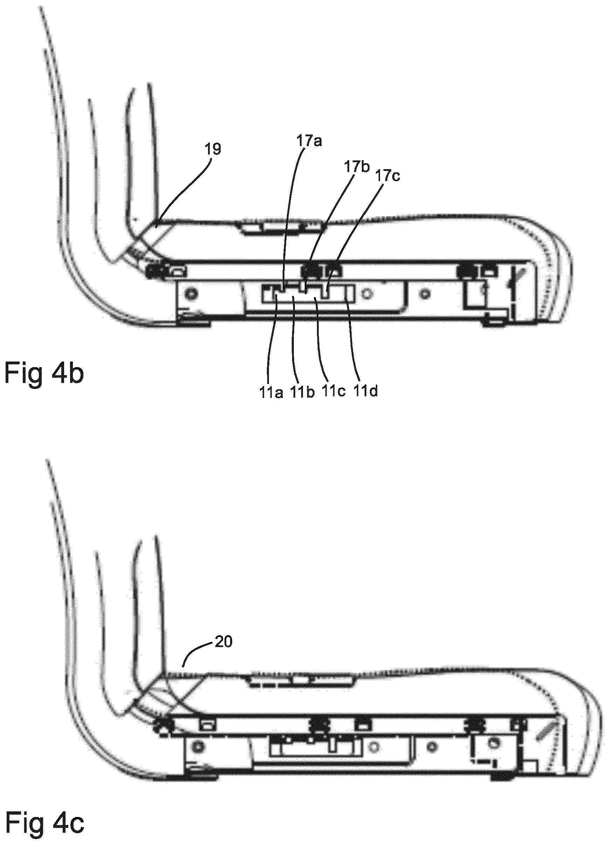

In diesem Ausführungsbeispiel ist die Rastkontur (9) als Durchbruch mit einem im Wesentlichen rechteckigen Querschnitt in einem ersten Halteprofil (2a) der Haltevorrichtung (2) integriert. Es wäre aber auch denkbar die Rastkontur als Ausnehmung in dem Halteprofil zu integrieren, wobei aufgrund der erhöhten mechanischen Stabilität ein Durchbruch bevorzugt wird. Die Rastkontur (9) wird in Fig. 4 bzw. Fig. 4a näher beschrieben. Der Rastvorsprung (10) ragt durch die Rastkontur (9) hindurch, wobei der durchragende Abschnitt (14) des Rastvorsprungs (10) mit dem Verbindungselement (13) in Wirkkontakt steht. Das Verbindungselement (13) ist T-förmig ausgestaltet, wobei der untere, schmälere Teil der Breite des Rastvorsprungs (10) entspricht und der obere, breitere Teil der Länge eines Betätigungsteils (13a) des Bedienelementes (7). Das Bedienelement (7) ist direkt oberhalb des durchragenden Abschnitts (14) des Rastvorsprungs (10) angeordnet. Der Abstand in Sitzbreitenrichtung (Y) zwischen dem Verbindungselement (13) und einer Sitzmittelachse (15) ist größer als der Abstand in Sitzbreitenrichtung (Y) zwischen der Sitzmittelachse (15) und des den Durchbuch enthaltenden Halteprofils (2a). Das Bedienelement befindet sich also am äußersten Rand des Sitzteils (4), wobei das die Rastkontur (9) tragende Halteprofil (2a) in Sitzbreitenrichtung (Y) näher zu einer Sitzmittelachse (15) angeordnet ist. Wird nun das Betätigungsteil (13a) ausreichend nach unten verlagert, wird durch das Verbindungselement (13) der Rastvorsprung (10) nach unten gedrückt und das Blattfederelement (12) nach unten gebogen. Die Arretierung des Sitzteils (4) ist somit aufgehoben, wodurch ein Verschieben des Sitzteils (4) möglich ist. In Fig. 2 ist die Bewegung des Bedienelements (7) und des Rastvorsprungs mit gestrichelten Linien angedeutet.

In Fig. 2 ist weiterhin ein erstes Halteprofil (2a) gezeigt. Neben der beschriebenen Rastkontur weist dieses Halteprofil (2a) eine Befestigungsvorrichtung (26) auf, womit die Haltevorrichtung (2) an einem entsprechenden Sitzunterbau (hier nicht gezeigt) befestigt werden kann. Weiterhin ist eine Schraubverbindung (35) gezeigt, mit der die Rückenlehne (3) an dem Halteprofil befestigt ist. Neben einer Schraubverbindung sind natürlich auch noch anderweitige Verbindungsarten denkbar. Schließlich ist an dem Haltprofil (2a) noch ein Verstärkungselement (36) angeordnet, um den Sitz gegenüber mechanischen Belastungen in dem Winkelbereich zu stabilisieren.

In Fig.4 ist der untere Sitzbereich in einer Seitendarstellung gezeigt. Das T-förmige Verbindungselement (13) und die als Durchbruch in dem Halteprofil (2a) ausgestaltete Rastkontur (9) sind hier ersichtlich.

Eine Ausführungsform der Rastkontur (9) ist in Fig. 4a detailliert dargestellt. Die Rastkontur (9) weist einen im Wesentlichen rechteckigen Querschnitt auf, wobei eine Länge (37) des Querschnitts sich in Sitzlängsrichtung (X) erstreckt. In einer Freigabeposition, d.h. der Rastvorsprung (10) greift nicht in eine Rastvertiefung (11) ein, bewegt sich durch die Verschiebung des Sitzteils (4) der Rastvorsprung (10) entlang dieser Länge (37) des Querschnitts. Somit entspricht diese Länge (37) einem maximalen Verschiebeweg des Sitzteils (4). An einem in Sitzhöhenrichtung (Z) oberen Bereich (38) der Rastkontur (9) ragen senkrechte Trennstege (17) in die Rastkontur (9) hinein. Die Trennstege (17) stellen somit die Begrenzungen der Rastvertiefungen (11) dar und definieren die Länge einer Rastvertiefung. Die Einragtiefe eines Trennstegs (17) definiert weiterhin den Betätigungsweg des Bedienelementes (7), denn das Bedienelement (7) muss so weit bewegt werden bis der Rastvorsprung (10) nicht mehr von den Trennstegen (17) eingegrenzt wird, um den Rastvorsprung (10) bzw. das Sitzteil (4) freizugeben. In dieser Ausführungsform haben die Trennstege eine rechteckige Form. Denkbar ist jedoch auch, dass die Trennstege abgerundete oder spitz-zulaufende Enden aufweisen. Solche Enden begünstigen ein Einrasten des Rastvorsprungs (10) in eine Rastvertiefung (11), auch für den Fall, dass der Rastvorsprung (10) teilweise mit einem Trennsteg (17) überlappt. Der Rastvorsprung (10) rutscht sozusagen in die Rastvertiefung (11). Ferner weist die Rastkontur (9) vier benachbarte Rastvertiefungen (11, 11a, 11b, 11c, 11d) auf, welche durch die Trennstege (17, 17a, 17b, 17c) voneinander beabstandet sind.

Bei Einrasten des Rastvorsprungs (10) in eine erste Rastvertiefung (11a) befindet sich das Sitzteil (4) in einer nicht verschobenen Grundposition (18). Bei Einrasten in eine zweite Rastvertiefung (11b) befindet sich das Sitzteil (4) in einer zweiten Position (19), welche um 25 mm entlang der Sitzlängsrichtung (X) gegenüber der Grundposition (18) verschoben ist und bei Einrasten in eine dritte Rastvertiefung (11c) befindet sich das Sitzteil (4) in einer zweiten Position (20), welche um 50 mm entlang der Sitzlängsrichtung (X) gegenüber der Grundposition (18) verschoben ist. Schließlich befindet sich das Sitzteil (4) bei Einrasten in eine vierte Rastvertiefung (11d) in einer dritten Position (21), welche um 75 mm entlang der Sitzlängsrichtung (X) gegenüber der Grundposition (18) verschoben ist. Die Rastkontur (9) weist weiterhin zwischen der dritten (11c) und der vierten Rastvertiefung (11d) einen Trennsteg (17, 17c) auf, welcher eine größere Einragtiefe aufweist als die übrigen Trennstege (17, 17a, 17b), so dass ein größerer Betätigungsweg notwendig ist, um den Rastvorsprung (10) von der dritten (11c) zu der vierten Rastvertiefung (11d) zu bewegen. Demzufolge ist ein größerer Betätigungsweg notwendig, um den Sitz in eine Endverschiebeposition zu bewegen.

In Fig. 4 befindet sich das Sitzteil (4) in einer nicht verschobenen Grundposition (18). In Fig. 4b hingegen befindet sich der Sitz in der zweiten Position (19). Hierbei ist das Sitzteil gegenüber der Grundposition verschoben, wobei die Grundposition durch Strichlinien angedeutet ist. In Fig. 4c ist der Sitz nochmalig verschoben und befindet sich in der dritten Position, welche gegenüber der Grundposition noch weiter verschoben ist, wobei die Grundposition wiederum durch Strichlinien angedeutet ist.

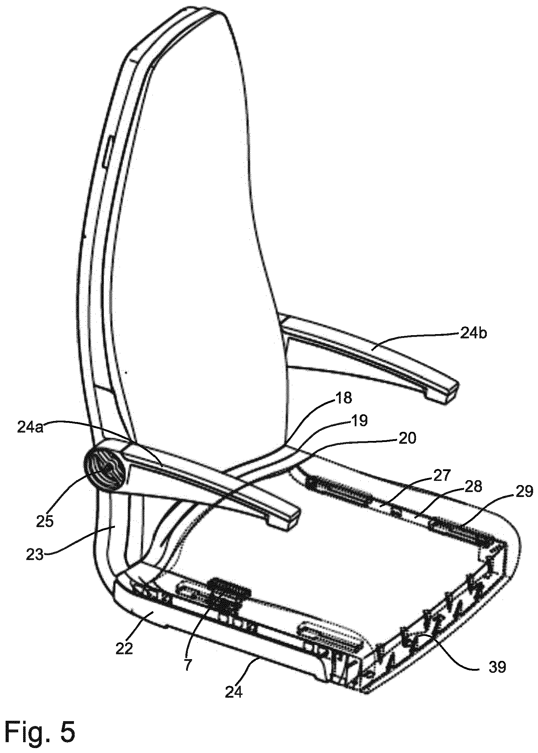

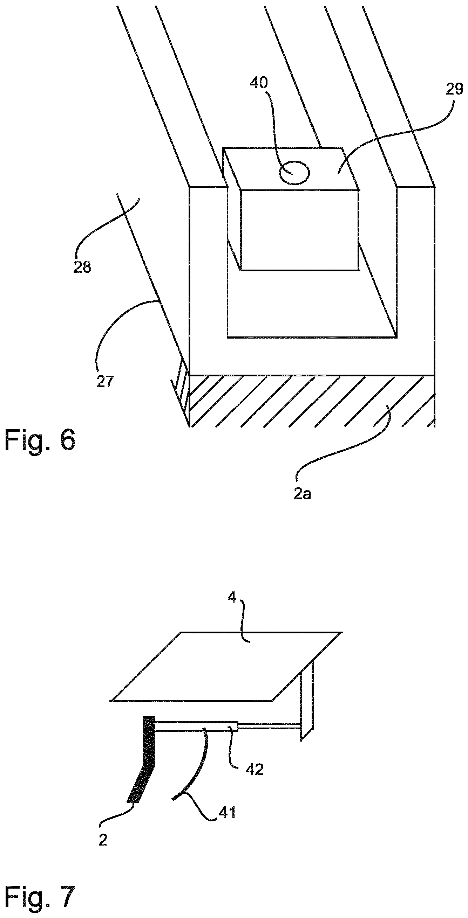

Fig. 5 zeigt den erfindungsgemäßen Sitz mit Rückenlehne (3) und Armlehnen (24a, 24b) in den verschiedenen oben genannten Positionen (18, 19, 20). Ebenso sind Befestigungsvorrichtungen (39), mittels welcher der Sitzpolsteranteil (5) an der Sitzschale (33) befestigt ist, dargestellt. Darüber hinaus sind das Schienensystem (27) mit Führungsschiene (28) und die Gleitelemente (29) dargestellt. Diese mögliche Ausführungsform des Schienensystems (27), mittels welchem das Sitzteil (4) gegenüber der Haltervorrichtung 82) verschiebbar gelagert ist, wird in Fig. 6 detailliert dargestellt. Das Schienensystem (27) umfasst eine U-förmige Führungsschiene (28), in der ein Gleitelement (29) gelagert ist. Die Führungsschiene (28) ist an einem Halteprofil (2a) befestigt, wohingegen das Gleitelement (29) durch Verbindung (40) an dem Sitzteil (4) befestigt ist.

In Fig. 7 ist schematisch eine weitere Ausführungsform des Feststellmechanismus (6) dargestellt. Hier ist zwischen dem Sitzteil (4) und der Haltevorrichtung (2) eine blockierbare Gasfeder (42) angeordnet. Die Anordnung an der Haltevorrichtung (2) wird nur schematisch angedeutet. Denkbar ist, dass die blockierbare Gasfeder (42) lediglich mit einem Halteprofil (2a) verbunden ist. Es ist aber auch denkbar, die blockierbare Gasfeder (42) mit beiden Halteprofil (2a, 2b) zu verbinden. Die Gasfeder (42) umfasst ein spezielles Kolben-Ventilsystem, wobei bei geschlossenem Ventil die Gasfeder (42) blockiert und sich einer Bewegung des Sitzteils (4) mit sehr hohem Widerstand entgegensetzt. Bei geöffnetem Ventil wirkt die Gasfeder kraftunterstützend und dämpfend. Die Gasfeder (42) wird hierbei durch einen Bowdenzug (41), der mit dem Bedienelement (7) verbunden ist, angesteuert.

### Bezugszeichenliste

- 1: Sitz
- 2: Haltevorrichtung
- 2a, 2b: Halteprofil
- 3: Rückenlehne
- 3a: Rückenpolster
- 3b: Polsteroberfläche
- 4: Sitzteil
- 5: Sitzpolsteranteil
- 5a: Bezug
- 5b: Polsteroberfläche
- 6: Feststellmechanismus
- 7: Bedienelement
- 8: Rasteinrichtung
- 9: Rastkontur
- 10: Rastvorsprung
- 11: Rastvertiefungen
- 11a, 11b,: erste bzw. zweite Rastvertiefung
- 11c, 11d: dritte bzw. vierte Rastvertiefung
- 12: Blattfederelement
- 12a: erster Abschnitt des Blattfederelements
- 12b: weiterer Abschnitt des Blattfederelements
- 13: Verbindungselement
- 13a: Betätigungselement
- 13b: Polsteraussparung
- 14: durchragender Abschnitt des Rastvorsprungs
- 15: Sitzmittelachse
- 16: Seitenbereich
- 17, 17a,: Trennstege
- 17b, 17c: Trennstege
- 18: Grundposition des Sitzteils
- 19: erste Position des Sitzteils
- 20: zweite Position des Sitzteils
- 21: dritte Position des Sitzteils
- 22: erster Abschnitt des Haltprofils
- 23: weiterer Abschnitt des Haltprofils
- 24a, 24b: Armlehnen
- 25: Armlehnengelenk
- 26: Befestigungsvorrichtung
- 27: Schienensystem
- 28: Führungsschiene
- 29: Gleitelement oder Rolle
- 30: Schalenelement
- 31: Rückenpolsteranteil
- 32: rückseitiges Schalenteil
- 33: Sitzschale
- 34: Schraubverbindung
- 35: Schraubverbindung
- 36: Verstärkungselement
- 37: Länge der Rastkontur
- 38: oberen Bereich der Rastkontur
- 39: Befestigungsvorrichtungen
- 40: Verbindung
- 41: Bowdenzug
- 42: blockierbare Gasfeder
- X: Sitzlängsrichtung
- Y: Sitzbreitenrichtung
- Z: Sitzhöhenrichtung
- α: Winkel zwischen dem ersten und dem weiteren Abschnitt des Blattfederelements

## Patentansprüche

1. Sitz (1) für ein Fahrzeug, insbesondere ein Schienenfahrzeug, mit einer zumindest ein Halteprofil (2a) umfassenden Haltevorrichtung (2), an der eine Rückenlehne (3) mit einem Rückenpolsteranteil (3a) und ein Sitzteil (4) mit einem Sitzpolsteranteil (5) angeordnet sind,
**dadurch gekennzeichnet, dass**
das Sitzteil (4) als Ganzes gegenüber der Haltevorrichtung (2) in einer Sitzlängsrichtung (X) verschiebbar angeordnet ist und über einen Feststellmechanismus (6) an der Haltevorrichtung arretierbar ist, wobei ein Bedienelement (7) in dem Sitzpolsteranteil (5) oder dem Rückenpolsteranteil (3a) integriert ist, welches mit dem Feststellmechanismus (6) mechanisch in Wirkverbindung ist und durch welches die Arretierung lösbar ist, wobei das Bedienelement (7) in einer Polsteraussparung in einem Seitenbereich des Sitzpolsteranteils (5) oder des Rückenpolsteranteils (3a) angeordnet ist.

2. Sitz nach Anspruch 1,
**dadurch gekennzeichnet, dass**
der Feststellmechanismus (6) als eine Rasteinrichtung (8) ausgebildet ist, wobei die Rasteinrichtung (8) eine Rastkontur (9) und einen mit der Rastkontur (9) zusammenwirkenden Rastvorsprung (10) umfasst, wobei die Rastkontur (9) an einem Seitenbereich (16) der Haltevorrichtung (2) angeordnet ist und zumindest zwei benachbarte Rastvertiefungen (11) aufweist, wobei der Rastvorsprung (10) in jeweils eine Rastvertiefung (11) eingreifbar ist.

3. Sitz nach Anspruch 2,
**dadurch gekennzeichnet, dass**
der Rastvorsprung (10) an einem ersten Abschnitt (12a) eines Blattfederelementes (12) angeordnet ist und das Blattfederelement (12) einen weiteren Abschnitt (12b) aufweist, der an dem Sitzteil (4) angeordnet ist, wobei der Rastvorsprung (10) anhand des Blattfederelementes (12) kraftschlüssig in eine Rastvertiefung (11) eingreift.

4. Sitz nach Anspruch 3,
**dadurch gekennzeichnet, dass**
der erste (12a) und der weitere Abschnitt (12b) des Blattfederelementes (12) einen Winkel (α) einschließen, so dass der erste Abschnitt (12a) sich ausgehend von dem Rastvorsprung (10) in Sitzhöhenrichtung (Z) schräg nach oben zu dem weiteren Abschnitt (12b) erstreckt, wodurch eine Federwirkung des Blattfederelements (12) in Sitzhöhenrichtung (Z) nach oben wirkt und der Rastvorsprung (10) in Sitzhöhenrichtung (Z) nach oben in eine Rastvertiefung (11) gedrückt wird.

5. Sitz nach einem der Ansprüche 2-4,
**dadurch gekennzeichnet, dass**
das Bedienelement (7) ein Verbindungselement (13) umfasst, welches mit dem Rastvorsprung (10) oder dem ersten Abschnitt (12a) des Blattfederelementes (12) wirkverbunden ist, wodurch das Blattfederelement (12) in Sitzhöhenrichtung (Z) entgegen der Federwirkung nach unten biegbar ist und somit der Rastvorsprung (10) aus einer Rastvertiefung (11) der Rastkontur (9) bewegbar ist, wodurch die Arretierung des Sitzteils (4) lösbar ist und somit das Sitzteil (4) in Sitzlängsrichtung (X) verschiebbar ist.

6. Sitz nach einem der Ansprüche 2-5,
**dadurch gekennzeichnet, dass**
die Rastkontur (9) als Ausnehmung oder Durchbruch mit einen im Wesentlichen rechteckigen Querschnitt in einem Halteprofil (2a) der Haltevorrichtung (2) integriert ist, wobei eine erste Länge des Querschnitts sich in Sitzlängsrichtung (X) erstreckt und einem maximalen Verschiebeweg des Sitzteils (4) entspricht, wobei an einem in Sitzhöhenrichtung (Z) oberen Bereich (38) der Ausnehmung oder des Durchbruchs senkrechte Trennstege (17) in die Ausnehmung oder den Durchbruch hineinragen und somit eine Rastvertiefung (11) definieren, wobei die Einragtiefe eines Trennstegs (17) den Betätigungsweg des Bedienelementes (7) definiert.

7. Sitz nach Anspruch 6,
**dadurch gekennzeichnet, dass**
der Rastvorsprung (10) durch die als Durchbruch ausgestaltete Rastkontur (9) hindurch ragt, wobei der durchragende Abschnitt (14) des Rastvorsprungs (10) mit dem Verbindungselement (13) in Wirkkontakt steht, wobei der Abstand in Sitzbreitenrichtung (Y) zwischen dem Verbindungselement (13) und einer Sitzmittelachse (15) größer ist als der Abstand in Sitzbreitenrichtung (Y) zwischen der Sitzmittelachse (15) und des den Durchbuch enthaltenden Halteprofils (2a).

8. Sitz nach einem der vorhergehenden Ansprüche,
**dadurch gekennzeichnet, dass**
der Sitzpolsteranteil (5) oder der Rückenpolsteranteil (3a) eine Polsteraussparung (16) aufweist, in dem das Bedienelement (7) angeordnet ist und ein Bezug (5a) sich über die Polsteroberfläche (3b, 5b) des Sitzpolsteranteils (5) und des Rückenpolsteranteils (3a) erstreckt, wobei die Polsteraussparung (16) mit dem Bedienelement (7) unter der Polsteroberfläche (3b, 5b) angeordnet ist oder die Polsteraussparung (16) als eine Freisparung in dem Sitzpolsteranteil (5) beziehungsweise des Rückenpolsteranteils (3a) ausgestaltet ist oder die Polsteraussparung (16) als eine Vertiefung in der Polsteroberfläche (5b) des Sitzpolsteranteils (5) beziehungsweise des Rückenpolsteranteils (3a) ausgestaltet ist, wobei an der Stelle des Bedienelements (7) der Bezug eine Kennzeichnung trägt.

9. Sitz nach einem der vorhergehenden Ansprüche,
**dadurch gekennzeichnet, dass**
die mechanische Wirkverbindung zwischen dem Bedienelement (7) und dem Feststellmechanismus (6) einen Bowdenzug (41) und/oder einen Gestängeantrieb umfasst.

10. Sitz nach einem der vorhergehenden Ansprüche,
**dadurch gekennzeichnet, dass**
der Feststellmechanismus (6) zumindest eine blockierbare Gasfeder (42) umfasst.

11. Sitz nach einem der Ansprüche 2-6,
**dadurch gekennzeichnet, dass**
die Rastkontur (9) vier benachbarte Rastvertiefungen (11, 11a, 11b, 11c, 11d) aufweist welche durch die Trennstege (17, 17a, 17b, 17c) derart voneinander beabstandet sind, dass bei Einrasten in eine erste Rastvertiefung (11a) sich das Sitzteil (4) in einer Grundposition (18) befindet, bei Einrasten in eine zweite Rastvertiefung (11b) sich das Sitzteil (4) in einer ersten Position (19) befindet, welche um 25 mm entlang der Sitzlängsrichtung (X) gegenüber der Grundposition (18) verschoben ist, bei Einrasten in eine dritte Rastvertiefung (11c) sich das Sitzteil (4) in einer zweiten Position (20) befindet, welche um 50 mm entlang der Sitzlängsrichtung (X) gegenüber der Grundposition (18) verschoben ist und bei Einrasten in eine vierte Rastvertiefung (11d) sich das Sitzteil (4) in einer dritten Position (21) befindet, welche um 75 mm entlang der Sitzlängsrichtung (X) gegenüber der Grundposition (18) verschoben ist.

12. Sitz nach Anspruch 11,
**dadurch gekennzeichnet, dass**
die Rastkontur (9) zwischen der dritten (11c) und der vierten Rastvertiefung (11d) einen Trennsteg (17, 17c) aufweist, welcher eine größere Einragtiefe aufweist als die übrigen Trennstege (17, 17a, 17b), so dass ein größerer Betätigungsweg notwendig ist, um den Rastvorsprung (10) von der dritten (11c) zu der vierten Rastvertiefung (11d) zu bewegen.

13. Sitz nach einem der vorhergehenden Ansprüche,
**dadurch gekennzeichnet, dass**
der Rückenpolsteranteil (3a) mit dem Sitzpolsteranteil (5) verbunden ist und sich bei einer Verschiebung des Sitzteils (4) zumindest abschnittsweise mitbewegt.

14. Sitz nach einem der vorhergehenden Ansprüche,
**dadurch gekennzeichnet, dass**
die Haltevorrichtung (2) zwei L-förmige Halteprofile (2a, 2b) mit einem ersten Abschnitt (22), der sich in Sitzlängsrichtung (X) erstreckt und einem weiteren Abschnitt (23) der sich in Sitzhöhenrichtung (Z) erstreckt, umfasst, wobei an dem weiteren Abschnitt (23) die Rückenlehne (3) anordenbar ist und wobei an dem weiteren Abschnitt (23) eine Armlehne (24a, 24b) anbringbar ist.

15. Sitz nach einem der vorhergehenden Ansprüche,
**dadurch gekennzeichnet, dass**
das Sitzteil (4) über ein Schienensystem (27) an der Haltvorrichtung (2) verschiebbar gelagert ist, wobei die Haltevorrichtung (2) eine Führungsschiene (28) aufweist, in der Gleitelemente (29), welche mit dem Sitzteil (4) verbunden sind, geführt werden.

## Claims

1. Seat (1) for a vehicle, in particular a rail vehicle, comprising a retaining device (2) which comprises at least one retaining profile (2a) and on which a backrest (3) comprising a backrest cushion portion (3a), and a seat part (4) comprising a seat cushion portion (5) are arranged,
**characterised in that**
the seat part (4) as a whole is arranged so as to be displaceable relative to the retaining device (2) in a seat longitudinal direction (X) and can be locked to the retaining device by means of a fixing mechanism (6), an operating element (7) being integrated in the seat cushion portion (5) or the backrest cushion portion (3a), which element is mechanically operatively connected to the fixing mechanism (6) and by means of which element the locking can be released, the operating element (7) being arranged in a cushion recess in a lateral region of the seat cushion portion (5) or of the backrest cushion portion (3a).

2. Seat according to claim 1,
**characterised in that**
the fixing mechanism (6) is designed as a latching means (8), the latching means (8) having a latching contour (9) and a latching protrusion (10) that cooperates with the latching contour (9), the latching contour (9) being arranged on a lateral region (16) of the retaining device (2) and comprising at least two adjacent latching depressions (11), the latching protrusion (10) being able to engage in one latching depression (11) in each case.

3. Seat according to claim 2,
**characterised in that**
the latching protrusion (10) is arranged on a first portion (12a) of a leaf spring element (12) and the leaf spring element (12) comprises a further portion (12b) that is arranged on the seat part (4), the latching protrusion (10) frictionally engaging in a latching depression (11) by means of the leaf spring element (12).

4. Seat according to claim 3,
**characterised in that**
the first (12a) and the further portion (12b) of the leaf spring element (12) form an angle (α) such that the first portion (12a) extends obliquely upwards towards the further portion (12b), in the seat height direction (Z), proceeding from the latching protrusion (10), as a result of which a spring effect of the leaf spring element (12) acts upwards in the seat height direction (Z) and the latching protrusion (10) is pushed upwards in the seat height direction (Z) and into a latching depression (11).

5. Seat according to any of claims 2-4,
**characterised in that**
the operating element (7) comprises a connecting element (13) which is operatively connected to the latching protrusion (10) or to the first portion (12a) of the leaf spring element (12), as a result of which the leaf spring element (12) can be bent downwards in the seat height direction (Z), against the spring effect, and the latching protrusion (10) can thus be moved out of a latching depression (11) of the latching contour (9), as a result of which the locking of the seat part (4) can be released and the seat part (4) can thus be displaced in the seat longitudinal direction (X).

6. Seat according to any of claims 2-5,
**characterised in that**
the latching contour (9) is integrated into a retaining profile (2a) of the retaining device (2) in the form of a recess or aperture having a substantially rectangular cross section, a first length of the cross section extending in the seat longitudinal direction (X) and corresponding to a maximum displacement path of the seat part (4), perpendicular separating ribs (17) projecting into the recess or the aperture at an upper region (38) of the recess or of the aperture in the seat height direction (Z) and thus defining a latching depression (11), the projection depth of a separating rib (17) defining the actuation path of the operating element (7).

7. Seat according to claim 6,
**characterised in that**
the latching protrusion (10) projects through the latching contour (9) formed as an aperture, the projecting portion (14) of the latching protrusion (10) being operatively connected to the connecting element (13), the spacing in the seat width direction (Y) between the connecting element (13) and a seat central axis (15) being greater than the spacing in the seat width direction (Y) between the seat central axis (15) and the retaining profile (2a) that contains the aperture.

8. Seat according to any of the preceding claims,
**characterised in that**
the seat cushion portion (5) or the backrest cushion portion (3a) comprises a cushion recess (16) in which the operating element (7) is arranged, and a cover (5a) extends over the cushion surface (3b, 5b) of the seat cushion portion (5) and of the backrest cushion portion (3a), the cushion recess (16) together with the operating element (7) being arranged under the cushion surface (3b, 5b) or the cushion recess (16) being designed as a cut-out in the seat cushion portion (5) or of the backrest cushion portion (3a), or the cushion recess (16) being designed as a depression in the cushion surface (5b) of the seat cushion portion (5) or of the backrest cushion portion (3a), the cover having a marking at the location of the operating element (7).

9. Seat according to any of the preceding claims,
**characterised in that**
the mechanical operative connection between the operating element (7) and the fixing mechanism (6) comprises a Bowden cable (41) and/or a linkage drive.

10. Seat according to any of the preceding claims,
**characterised in that**
the fixing mechanism (6) comprises at least one lockable gas spring (42).

11. Seat according to any of claims 2-6,
**characterised in that**
the latching contour (9) comprises four adjacent latching depressions (11, 11a, 11b, 11c, 11d) which are mutually spaced by the separating ribs (17, 17a, 17b, 17c) in such a way that, when latched in a first latching depression (11a) the seat part (4) is in a home position (18), when latched in a second latching depression (11b) the seat part (4) is in a first position (19) that is displaced relative to the home position (18) by 25 mm in the seat longitudinal direction (X), when latched in a third latching depression (11c) the seat part (4) is in a second position (20) that is displaced relative to the home position (18) by 50 mm in the seat longitudinal direction (X), and when latched in a fourth latching depression (11d) the seat part (4) is in a third position (21) that is displaced relative to the home position (18) by 75 mm in the seat longitudinal direction (X).

12. Seat according to claim 11,
**characterised in that**
the latching contour (9) comprises a separating rib (17, 17c) between the third (11c) and the fourth latching depression (11d) which has a greater projection depth than the remaining separating ribs (17, 17a, 17b), such that a greater actuation path is required in order to move the latching protrusion (10) from the third (11c) to the fourth latching depression (11d).

13. Seat according to any of the preceding claims,
**characterised in that**
the backrest cushion portion (3a) is connected to the seat cushion portion (5) and moves together therewith, at least in portions, when the seat part (4) is displaced.

14. Seat according to any of the preceding claims,
**characterised in that**
the retaining device (2) comprises two L-shaped retaining profiles (2a, 2b) having a first portion (22) that extends in the seat longitudinal direction (X) and a further portion (23) that extends in the seat height direction (Z), it being possible for the backrest (3) to be arranged on the further portion (23), and it being possible for an armrest (24a, 24b) to be attached to the further portion (23).

15. Seat according to any of the preceding claims,
**characterised in that**
the seat part (4) is displaceably mounted on the retaining device (2) by means of a rail system (27), the retaining device (2) comprising a guide rail (28) in which sliding elements (29) that are connected to the seat part (4) are guided.

## Revendications

1. Siège (1) pour un véhicule, en particulier un véhicule sur rails, avec un dispositif de maintien (2) comportant au moins un profilé de maintien (2a), sur lequel sont disposés un dossier (3) avec une partie (3a) de rembourrage de dossier et une partie siège (4) avec une partie (5) de rembourrage de siège,
**caractérisé par le fait que**
la partie siège (4) est agencée déplaçable dans son ensemble par rapport au dispositif de maintien (2) dans une direction longitudinale de siège (X) et est verrouillable sur le dispositif de maintien par un mécanisme de blocage (6), un élément de commande (7) étant intégré dans la partie (5) de rembourrage de siège ou la partie (3a) de rembourrage de dossier, lequel est en liaison fonctionnelle mécaniquement avec le mécanisme de blocage (6) et par lequel l'arrêt est détachable, l'élément de commande (7) étant disposé dans une région latérale de la partie (5) de rembourrage de siège ou de la partie (3a) de rembourrage de dossier dans une cavité de rembourrage.

2. Siège selon la revendication 1,
**caractérisé par le fait que**
le mécanisme de blocage (6) est réalisé sous la forme d'un dispositif d'encliquetage (8), le dispositif d'encliquetage (8) comportant un contour d'encliquetage (9) et une saillie d'encliquetage (10) coopérant avec le contour d'encliquetage (9), le contour d'encliquetage (9) étant disposé sur une région latérale (16) du dispositif de maintien (2) et présentant au moins deux évidements d'encliquetage (11) voisins, la saillie d'encliquetage (10) étant engageable dans un évidement d'encliquetage respectif (11).

3. Siège selon la revendication 2,
**caractérisé par le fait que**
la saillie d'encliquetage (10) est disposée sur une première section (12a) d'un élément ressort à lame (12) et l'élément ressort à lame (12) présente une autre section (12b) qui est disposée sur la partie siège (4), la saillie d'encliquetage (10) s'engageant dans un évidement d'encliquetage (11) par friction au moyen de l'élément ressort à lame (12).

4. Siège selon la revendication 3,
**caractérisé par le fait que**
la première section (12a) et l'autre section (12b) de l'élément ressort à lame (12) forment un angle (α) de telle sorte que la première section (12a) s'étend obliquement vers le haut par rapport à l'autre section (12b) à partir de la saillie d'encliquetage (10) dans la direction de la hauteur de siège (Z), ce par quoi un effet ressort de l'élément ressort à lame (12) agit vers le haut dans la direction de la hauteur de siège (Z) et la saillie d'encliquetage (10) est pressée dans un évidement d'encliquetage (11) vers le haut dans la direction de la hauteur de siège (Z).

5. Siège selon l'une des revendications 2-4,
**caractérisé par le fait que**
l'élément de commande (7) comporte un élément de liaison (13), lequel est en liaison fonctionnelle avec la saillie d'encliquetage (10) ou la première section (12a) de l'élément ressort à lame (12), ce par quoi l'élément ressort à lame (12) est apte à être courbé vers le bas à l'encontre de l'effet ressort dans la direction de la hauteur de siège (Z) et par conséquent la saillie d'encliquetage (10) est déplaçable hors d'un évidement d'encliquetage (11) du contour d'encliquetage (9), ce par quoi l'arrêt de la partie siège (4) est détachable et par conséquent la partie siège (4) est déplaçable dans la direction longitudinale de siège (X).

6. Siège selon l'une des revendications 2-5,
**caractérisé par le fait que**
le contour d'encliquetage (9) est intégré dans un profilé de maintien (2a) du dispositif de maintien (2) comme évidement ou percée avec une section transversale sensiblement rectangulaire, ce par quoi une première longueur de la section transversale s'étend dans la direction longitudinale de siège (X) et correspond à un trajet de déplacement maximal de la partie siège (4), où, sur une région supérieure (38) dans la direction de la hauteur de siège (Z) de l'évidement ou de la percée, des barrettes de séparation verticales (17) pénètrent dans l'évidement ou la percée et par conséquent définissent un évidement d'encliquetage (11), la profondeur de pénétration d'une barrette de séparation (17) définissant la course d'actionnement de l'élément de commande (7).

7. Siège selon la revendication 6,
**caractérisé par le fait que**
la saillie d'encliquetage (10) traverse le contour d'encliquetage (9) réalisé sous la forme d'une percée, la section traversante (14) de la saillie d'encliquetage (10) étant en contact fonctionnel avec l'élément de liaison (13), la distance dans la direction de la largeur de siège (Y) entre l'élément de liaison (13) et un axe médian de siège (15) étant supérieure à la distance dans la direction de la largeur de siège (Y) entre l'axe médian de siège (15) et le profilé de maintien (2a) contenant la percée.

8. Siège selon l'une des revendications précédentes,
**caractérisé par le fait que**
la partie (5) de rembourrage de siège ou la partie (3a) de rembourrage de dossier présente un évidement de rembourrage (16) dans lequel l'élément de commande (7) est disposé et une enveloppe (5a) s'étend au-dessus de la surface de rembourrage (3b, 5b) de la partie (5) de rembourrage de siège et de la partie (3a) de rembourrage de dossier, l'évidement de rembourrage (16) étant disposé avec l'élément de commande (7) sous la surface de rembourrage (3b, 5b) ou l'évidement de rembourrage (16) étant réalisé sous la forme d'un évidement dans la partie (5) de rembourrage de siège, respectivement de la partie (3a) de rembourrage de dossier, ou l'évidement de rembourrage (16) étant réalisé sous la forme d'une cavité dans la surface de rembourrage (5b) de la partie (5) de rembourrage de siège respectivement de la partie (3a) de rembourrage de dossier, l'enveloppe portant un marquage à l'emplacement de l'élément de commande (7).

9. Siège selon l'une des revendications précédentes,
**caractérisé par le fait que**
la liaison fonctionnelle mécanique entre l'élément de commande (7) et le mécanisme de blocage (6) comporte un câble Bowden (41) et/ou un mécanisme à tringlerie.

10. Siège selon l'une des revendications précédentes,
**caractérisé par le fait que**
le mécanisme de blocage (6) comporte au moins un ressort à gaz (42) apte à être bloqué.

11. Siège selon l'une des revendications 2-6,
**caractérisé par le fait que**
le contour d'encliquetage (9) présente quatre évidements d'encliquetage voisins (11, 11a, 11b, 11c, 11d), lesquels sont espacés l'un de l'autre par les barrettes de séparation (17, 17a, 17b, 17c), de telle sorte que, lors de l'encliquetage dans un premier évidement d'encliquetage (11a), la partie siège (4) se trouve dans une position de base (18), lors de l'encliquetage dans un deuxième évidement d'encliquetage (11b), la partie siège (4) se trouve dans une première position (19), laquelle est décalée vis-à-vis de la position de base (18) de 25 mm le long de la direction longitudinale de siège (X), lors de l'encliquetage dans un troisième évidement d'encliquetage (11c), la partie siège (4) se trouve dans une deuxième position (20), laquelle est décalée vis-à-vis de la position de base (18) de 50 mm le long de la direction longitudinale de siège (X), et lors de l'encliquetage dans une quatrième position d'encliquetage (11d), la partie siège (4) se trouve dans une troisième position (21), laquelle est décalée vis-à-vis de la position de base (18) de 75 mm le long de la direction longitudinale de siège (X).

12. Siège selon la revendication 11,
**caractérisé par le fait que**
le contour d'encliquetage (9) présente une barrette de séparation (17, 17c) entre le troisième (11c) et le quatrième évidement d'encliquetage (11d), laquelle présente une profondeur de pénétration supérieure aux autres barrettes de séparation (17, 17a, 17b) de telle sorte qu'une course d'actionnement plus grande est nécessaire pour déplacer la saillie d'encliquetage (10) du troisième (11c) au quatrième évidement d'encliquetage (11d).

13. Siège selon l'une des revendications précédentes,
**caractérisé par le fait que**
la partie (3a) de rembourrage de siège est reliée à la partie (5) de rembourrage de dossier et se déplace avec elle au moins par sections lors d'un déplacement de la partie siège (4).

14. Siège selon l'une des revendications précédentes,
**caractérisé par le fait que**
le dispositif de maintien (2) présente deux profilés de maintien (2a, 2b) en forme de L avec une première section (22), qui s'étend dans la direction longitudinale de siège (X) et une autre section (23) qui s'étend dans la direction de la hauteur de siège (Z), où, sur l'autre section (23), le dossier (3) est apte à être disposé, et où, sur l'autre section (23), un accoudoir (24a, 24b) est apte à être fixé.

15. Siège selon l'une des revendications précédentes,
**caractérisé par le fait que**
la partie siège (4) est montée déplaçable sur le dispositif de maintien (2) par un système de rail (27), le dispositif de maintien (2) présentant un rail de guidage (28) dans lequel des éléments de glissement (29), qui sont reliés avec la partie siège (4), sont guidés.
